# EUROPEAN PATENT APPLICATION

(11) **EP 1 216 805 A1**
(43) Date of publication of application: **26.06.2002**
(21) Application number: 00311685.2
(22) Date of filing: 22.12.2000
(51) Int. Cl.: B28D 1/12

(54) **Circular saw blade with abrasive regions on each face**

(71) Applicant: Marcrist International Limited, Doncaster DN3 1QR (GB)
(72) Inventor: The designation of the inventor has not yet been filed
(74) Representative: Loven, Keith James

(57) **Abstract**

A circular saw blade has one or more abrasive regions (3) formed on or in the support disc (10) thereof. The regions (3) are preferably formed by cutting an aperture in the disc (10) and compacting a mixture of metallic powder and abrasive grit, preferably diamond, into the aperture, and then sintering the material.

## Description

### Field of the Invention

The present invention relates generally to circular saw blades, and more particularly to a circular saw blade of the type having diamond or other abrasive cutting members for use in cutting masonry and stone.

### Background to the Invention

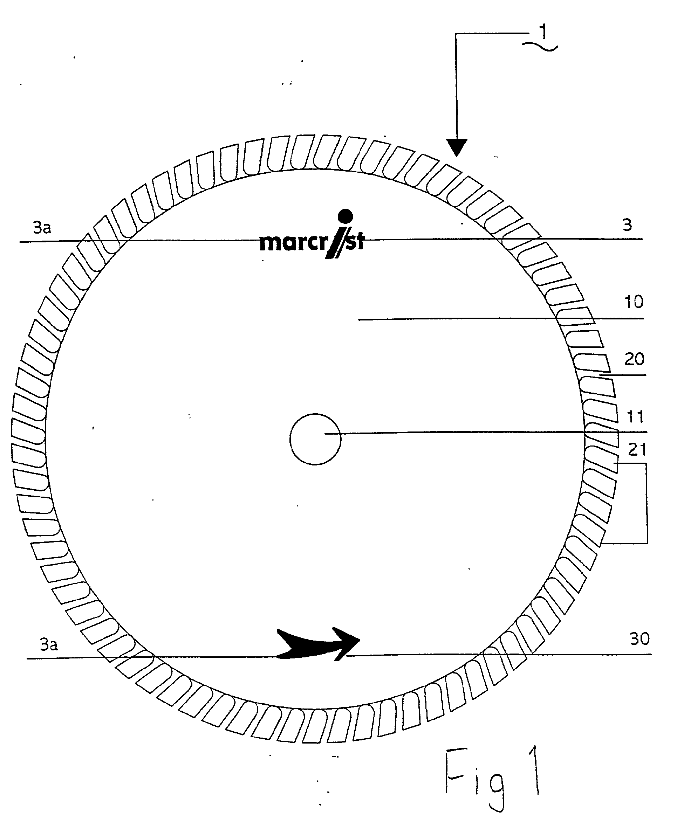

Figure 1 is a side view showing a conventional circular saw blade 1, consisting of a metal disc 10 having a centre aperture 11 for securing the blade to the shaft of the drive motor of the circular saw (not shown). An annular cutting region 20 is disposed around the outer periphery of the disc 10, and carries a plurality of abrasive tips 21 spaced therearound. In an alternative configuration, a plurality of teeth are formed around the periphery of the disc 10, and abrasive tips are attached to the teeth.

When a cutting operation is performed using a circular saw equipped with this known type of circular saw, a workpiece is cut by the abrasive tips 21 as the blade 9 is rotated. During this operation, a large amount of heat is generated on not only the annular cutting region 20, but also both side faces of the disk 10, so that the side faces are rapidly heated. The heat generated in the disk 10 is transmitted to the abrasive tips 21, so that the durability thereof is reduced, the cut surfaces of the workpiece become rough, and the workpiece is not cut precisely. Additionally, the heat can cause the disc 10 to become deformed, and this can lead to the generation of noise, and even to jamming of the blade in the cut slot in the workpiece or disintegration of the blade.

It is usual for various marks 30, such as the manufacturer's name, the name of the product, directions for use, and a sign such as an arrow indicating direction of rotation, to appear on both faces of the disc 10. The marks 30 are typically printed on the disc, embossed or adhered thereto, or engraved therein, and are easily worn away or damaged by the friction between the faces of the disc and the workpiece, in use. Accordingly, the indicatory and advertising functions of the marks 30 are eliminated, so that inconvenience is caused, with a danger of misuse of the disc, as well as loss of advertising effect.

### Summary of the Invention

Accordingly, the present invention provides a circular saw blade comprising a support disc having cutting elements disposed around the periphery thereof, characterised by at least one abrasive region on each opposed face of the disc formed of an abrasive material and having a thickness greater than the remainder of the disc.

Preferably, the cutting elements are of the type comprising an abrasive grit supported in a softer carrier material. For example, the grit may be a carbide grit, or diamond, and the carrier material may be a metal or metal alloy. The abrasive regions are preferably formed from a material having the same cutting capacity as the material or the cutting elements, and are more preferably formed of the same material.

The abrasive regions may be formed by cutting a recess or aperture in the disc, filling the recess or aperture with a mixture of abrasive grit and powdered carrier material, and compacting and hardening the mixture. The hardening may comprise sintering.

In an alternative manufacturing process, preformed abrasive elements are mounted in apertures or recesses in the disc, for example by welding, especially laser welding, or by brazing.

Each of the regions preferably has a thickness greater than the remainder of the disc, but less than that of each of the cutting elements.

The regions preferably comprise indicia indicating identifying or instructional information, advertising names or logos, or the like. This may be achieved by shaping the regions, by forming a relief or intaglio pattern in the surface thereof, by printing on them, by incorporating coloured materials, or by any combination selected from these possibilities. A number of different regions may be provided, spaced around the face of the disc.

The circular saw blade of the present invention is capable of reducing the generation of heat therein by reducing contact of the workpiece with the faces of the blade, thereby extending the life of the blade and preserving the indicia or marks on the face thereof.

### Brief Description of the Drawings

In the drawings:
Figure 1 is a side view of a circular saw blade in accordance with the prior art;
Figure 2 is a side view of a circular saw blade according to a preferred embodiment of the invention; and

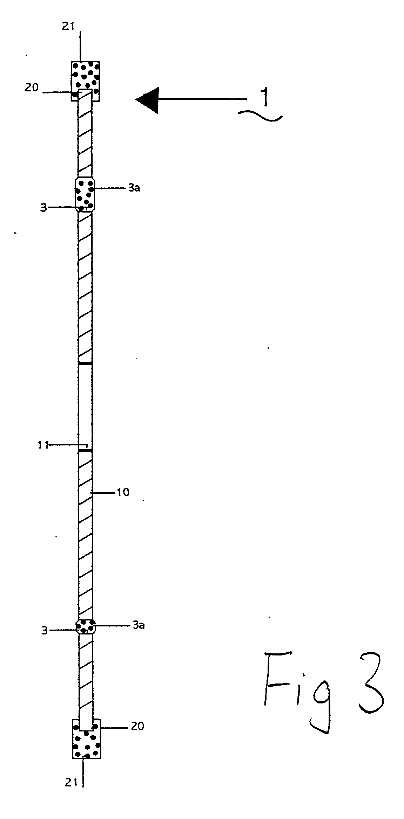

Figure 3 is a cross section taken along line A-A' of Figure 2.

### Detailed Description of the Illustrated Embodiment

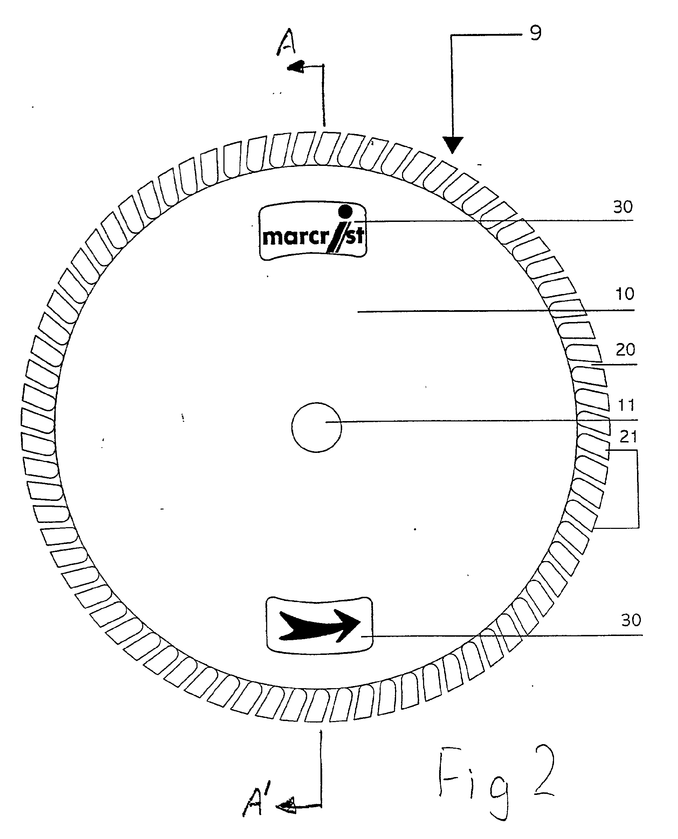

Referring to Figure 2, the circular saw blade 1 includes a disc 10 having a centre aperture 11 for securing the blade to the shaft of a drive motor of a circular saw tool (not shown). An annular cutting portion 20 on which a plurality of cutting tips 21 are provided at regular intervals is disposed around the outer periphery of the disc 10. Two marks or indicia 3 are formed in the disc 10, with one situated above the aperture 11 and one below, relative to the orientation illustrated. The marks 3 comprise abrasive regions formed by cutting cavities through the disc 10, filling the cavities with a mixture of metallic powders 3a identical with the abrasive material of the abrasive tips 21, and hardening the mixture of metallic powders to have the same cutting capacity as that of each abrasive tip 21. Each mark 3 preferably has a thickness greater than that of the disc, but less than that of each abrasive tip 21.

Describing the manufacturing process in more detail, the centre aperture 11 is cut through the centre of the disc 10 using a known cutting machine (not shown). Additionally, two cavities for marks 3 are cut through two portions of the disc 10 using the cutting machine. The marks 3 may be, for example, a manufacturer's name, the name of the product, directions for use, a sign such as an arrow for indicating the direction of rotation, or a combination of some or all of these. The marks may be selected according to the particular circular saw type. Accordingly, the cavities may be formed in a variety of shapes, which will not be described in detail here.

The mixture of metallic powders 3a identical with that used to form the cutting tips 21 is filled into the cavities and compacted from both sides by a known press machine while the disc 10 in which the aperture 11 and he cavities are formed is horizontally disposed on a work table (not shown). The mixture of metallic powders 3a is obtained by mixing together in a mixing machine a predetermined ratio of cobalt, copper, tin and iron. Other metals and alloys may be used alternatively. A mixing time of one hour is typical, after which diamond powder or other abrasive material is added, followed by further mixing for about ten minutes.

The mixture of metallic powders can be formed into the marks 3 having a cutting capacity identical with that of the cutting tips 21. This is done by primary compaction of the mixture in the cavities using a press machine, followed by secondary compaction with heating at a temperature of 700-900°C using a pair of moulding dies to provide the desired surface pattern of the marks 3, pressed against the opposed surfaces thereof in a press machine.

The hot-moulded cutting tips 21 are ground to be capable of cutting a workpiece, for example by use of a grinding stone, and the hot-moulded marks 3 are ground to have a thickness greater than that of the disc 10 but less than that of each cutting tip 21, again using a grinding stone, for example.

When a workpiece is cut using a conventional circular saw blade, such as that illustrated in Figure 1, the blade rotates and the cutting tips gradually cut into the workpiece. Until the circular saw blade stops rotating, friction occurs at the points of contact and accordingly heat is generated at these points.

In accordance with the present invention, both sides of the disc 10 are space apart from the workpiece by the marks 3, so that surface contact between the disc 10 and the workpiece is effectively prevented. As a result, the life span of the circular saw blade is lengthened owing to a reduction in the generation of heat, and noise due to vibration of the circular saw is minimised. In addition, since the marks 3 have the same cutting capacity as that of the cutting tips 21, the cutting tips are held true and the cut surfaces of the workpiece are cut smoothly and have low roughness.

The marks 3 can preserve their indicatory and advertising functions until the life span of the circular saw blade 1 is reached, unlike printed or attached marks as described hereinbefore with reference to Figure 1.

When the marks 3 are decorated in relief of intaglio during the hot-moulding, or are ground and coloured, the discriminative capacity of the marks can be improved to enhance the indicatory and advertising functions of the marks 3.

As described hereinbefore, the present invention provides a circular saw blade in which marks made of a hardened mixture of metallic powders are formed through the disc, so that gaps are created between the circular saw blade and the workpiece during a cutting operation, thereby reducing the generation of heat and cutting the cut surfaces secondly. As a result, the life span of the circular saw blade is lengthened considerably and the cut surfaces become smoother.

In addition, the marks of the circular saw blade are not worn away or damaged during the life span of the blade. Inconvenience in attaching and printing the marks repeatedly is thus eliminated, and an unskilled worker can use the blade safely, and its manufacturer's advertisement can be maintained for a long time.

It will be appreciated that, while Figure 2 shows a simple configuration with just two abrasive regions 30, displaying symbols, different numbers of abrasive regions may be employed, having different shapes and configurations to those shown. For example, some of the abrasive regions may be decorated with simple patterns, or undecorated. The regions are preferably spaced from the central hole 11 so as to be adjacent to the abrasive or cutting tips 21, but additional regions may also be provided inwardly of these, for example to permit greater cutting depths in the workpiece to be achieved.

## Claims

1. A circular saw blade comprising a support disc (10) having cutting elements (21) disposed around the periphery thereof, **characterised by** at least one abrasive region (3) on each opposed face of the disc (10) formed of an abrasive material and having a thickness greater than the remainder of the disc.

2. A circular saw blade according to Claim 1, wherein the cutting elements (21) are of the type comprising an abrasive grit supported in a softer carrier material.

3. A circular saw blade according to Claim 1 or 2, wherein the abrasive regions (3) comprise a material having the same cutting capacity as the cutting elements.

4. A circular saw blade according to Claim 3, wherein the abrasive regions (3) comprise an abrasive grit supported in a softer carrier material.

5. A circular saw blade according to any preceding claim, wherein the abrasive regions (3) are formed by cutting a recess or aperture in the disc, filling the recess or aperture with a mixture of abrasive grit and powdered carrier material, and compacting and hardening the mixture.

6. A circular saw blade according to Claim 5, wherein the hardening comprises sintering.

7. A circular saw blade according to any preceding claim, wherein at least one of the abrasive regions (3) comprises indicia.

8. A circular saw blade according to any preceding claim, wherein at least one of the abrasive regions (3) is provided with a decorative outline shape.

9. A circular saw blade according to any preceding claim, wherein at least one of the abrasive regions (3) is formed with a relief or intaglio pattern in the surface thereof.

10. A circular saw blade according to any preceding claim, provided with a plurality of abrasive regions (3) on each face thereof.
